## Europäisches Patentamt

## European Patent Office

## Office européen des brevets

(11) Veröffentlichungsnummer: **0 186 061**
**A2**

(12) **EUROPÄISCHE PATENTANMELDUNG**

(21) Anmeldenummer: 85115862.6

(22) Anmeldetag: 12.12.85

(51) Int. Cl.⁴: **G 02 C 5/04**

(30) Priorität: 24.12.84 DE 3447369

(43) Veröffentlichungstag der Anmeldung:
02.07.86 Patentblatt 86/27

(84) Benannte Vertragsstaaten:
AT BE CH DE FR GB IT LI LU NL SE

(71) Anmelder: Steiner, Walter
Säntisstrasse 52
CH-8311 Brütten(CH)

(72) Erfinder: Steiner, Walter
Säntisstrasse 52
CH-8311 Brütten(CH)

(74) Vertreter: Rottmann, Maximilian R.
c/o Rottmann + Quehl AG Glattalstrasse 37
CH-8052 Zürich(CH)

(54) Sehhilfsgerät, insbesondere Lesehilfsgerät.

(57) Das Sehhilfsgerät, insbesondere Lesehilfsgerät (10) besitzt ein Halteorgan (13), welches an seinen beiden Enden je mit einem schwenkbar gelagerten Bügel (16a, 16b) versehen ist. Am Halteorgan (13) sind ausserdem, in der Mitte, ein Stützteil (15) zur Auflage auf der Nasenwurzel des Benutzers sowie zwei optische Linsen (12a, 12b) verschiebbar und durch den Benutzer selbst auswechselbar befestigt. Ein Benutzer kann sich somit seine individuell angepasste Lesehilfe durch zweckmässige Auswahl des Mittelteils (15) und der meistens unterschiedlich starken Linsen (12a, 12b) selbst zusammenstellen. Die Linsen können leicht dem Augenabstand angepasst werden, indem sie entlang des Halteorgans (13) verschoben werden.

FIG. 3

## SEHHILFSGERAET, INSBESONDERE LESEHILFSGERAET

Die vorliegende Erfindung bezieht sich auf ein Sehhilfsgerät, insbesondere auf ein Lesehilfsgerät, mit einem Traggestell für zwei im Abstand nebeneinander angeordnete, optische Linsen, welches Gestell einen mittigen, zur Auflage auf die Nasenwurzel eines Benützers bestimmten Stützteil, mindestens ein mit diesem mittigen Stützteil verbundenes Halteorgan zur Aufnahme der beiden Linsen sowie zwei an den freien Enden des Gestells schwenkbar befestigte, zur Auflage auf den Ohrenflügel-Ansätzen bestimmte Bügel aufweist.

Solche Geräte erfreuen sich insbesondere bei betagten Menschen, die bekanntlich oft Mühe haben, kleine Gegenstände oder kleingedruckte Schrift zu erkennen, steigender Beliebtheit. Es sind deshalb auch Geräte der gattungsgemässen Art auf dem Markt, die im Prinzip nichts anderes sind als zwei durch ein Gestell vor den Augen gehaltene Vergrösserungsgläser.

Es ist nun aber eine bekannte Tatsache, dass die Sehkraft der beiden menschlichen Augen in den allerwenigsten Fällen genau gleich ist. Im übrigen kann der Augenabstand bei Menschen in einem gewissen Rahmen variieren, und schliesslich ist für einen komfortablen, ermüdungsfreien Sitz eines solchen Sehhilfsgerätes auch die Nasenwurzelbreite von entscheidender Bedeutung.

Bisher bekannte und auf dem Markt erhältliche Lesehilfsgeräte der gattungsgemässen Art vermögen wohl eine gewisse Verbesserung beim Erkennen von kleinen Gegenständen oder kleingedruckter Schrift zu bieten, berücksichtigen aber die zuvor genannten Probleme in keiner Weise.

Es ist deshalb die Aufgabe der vorliegenden Erfindung, ein Sehhilfsgerät der eingangs genannten Art so auszubilden, dass die Nachteile der bekannten Geräte nicht mehr auftreten, welches insbesondere einen ermüdungsfreien Gebrauch auch während längerer Zeitdauer gewährleistet und welches zudem eine erhöhte Fähigkeit zum Erkennen kleinster Gegenstände bzw. Schriftbilder bieten kann.

Nach einem ersten Grundgedanken der Erfindung wird diese Aufgabe bei einem gattungsgemässen Gerät dadurch gelöst, dass die beiden optischen Linsen lösbar und durch den Benutzer des Sehhilfsgerätes auswechselbar am Halteorgan bzw. an den Halteorganen des Traggestelles befestigt ist bzw. sind, währenddem das Halteorgan bzw. die Halteorgane mit dem mittigen Stützteil fest verbunden ist bzw. sind. Dies erlaubt dem Benutzer zunächst einmal, auf die unterschiedliche Sehkraft seiner beiden Augen Rücksicht zu nehmen und die beiden Linsen entsprechend seinen persönlichen Anforderungen auszuwählen und einzusetzen. Schon dadurch wird eine wesentliche Verbesserung der Langzeitverträglichkeit eines solchen Gerätes erreicht.

Nach einem zweiten Grundgedanken der Erfindung wird die gestellte Aufgabe dadurch gelöst, dass die beiden optischen Linsen fest mit dem Halteorgan bzw. den Halteorganen des Traggestelles verbunden ist bzw. sind oder dass jede Linse mit dem zugeordneten Haltorganteil zusammen eine unlösbare Einheit bildet, währenddem das Halteorgan bzw. die Halteorgane bzw. die genannten Einheiten mit dem mittigen Stützteil lösbar und durch den Benutzer auswechselbar verbunden sind. Auch dadurch lässt sich der vorgenannte Effekt erzielen.

Nach einem dritten Grundgedanken der Erfindung lässt sich die Aufgabe besonders vorteilhaft auch dadurch lösen, dass sowohl die beiden optischen Linsen mit dem jeweils zugeordneten Halteorganteil als auch das Halteorgan bzw. die Halteorgane mit dem mittig angeordneten Stützteil lösbar und durch den Benutzer auswechselbar verbunden sind. Diese Lösung bietet die grösste Flexibilität, wie nachstehend noch ausführlicher beschrieben werden wird.

Eine weitere Verbesserung lässt sich dadurch erzielen, dass das mittige Stützteil, bezogen auf den Abstand der Befestigungsorte für zwei davon abstehende Linsen-Halteorgane, innerhalb eines Satzes von solchen Geräten unterschiedliche Breiten besitzt. Diese Massnahme gibt dem Benutzer die Freiheit, ein mittleres Stützteil auszuwählen, das genau seinem Augenabstand angepasst ist. Eine weitere Möglichkeit ist darin zu sehen, dass dieses Stützteil bezüglich seiner Auflagefläche auf der Nasenwurzel unterschiedliche Breite besitzt, um den Tragkomfort zu verbessern. Es versteht sich, dass die beiden Massnahmen auch bei ein und demselben Mittelteil sinngemäss kombiniert werden können.

Ferner ist es auch denkbar, das mittige Stützteil verstellbar auszubilden, nicht nur in Bezug auf seine Gesamtbreite mit Rücksicht auf die Befestigungsorte der Linsen-Halteorgane , sondern auch hinsichtlich seiner Auflagefläche auf der Nasenwurzel des Benutzers.

Schliesslich ist bei einer Weiterbildung des erfindungsgemässen Gerätes vorgesehen, dass am ohrauflageseitigen Ende zumindest des einen Bügels eine Lupe eingebaut ist. Dadurch können, bei abgenommenem Gerät, auch kleinste Gegenstände bzw. kleingedruckte Schrift mühelos erkannt werden. Zweckmässigerweise und im Sinne einer leichten Bedienbarkeit kann das ohrauflageseitige Ende zumindest desjenigen Bügels, welches die Lupe enthält, gegenüber dem restlichen Bügelteil schwenkbar ausgebildet sein.

Im folgenden werden Ausführungsbeispiele des erfindungsgemässen Gerätes, unter Bezugnahme auf die beiliegenden Zeichnungen, näher erläutert. In den Zeichnungen zeigen:

Fig. 1     eine Ansicht eines ersten Ausführungsbeispieles
           des erfindungsgemässen Sehhilfsgerätes von vorne,

Fig. 2      eine Teilansicht des Gerätes gemäss Fig. 1 von
            oben,

Fig. 3      eine Ansicht eines zweiten Ausführungsbeispieles
            des erfindungsgemässen Sehhilfsgerätes von vorne,
            und

Fig. 4      die Seitenansicht eines Bügels.

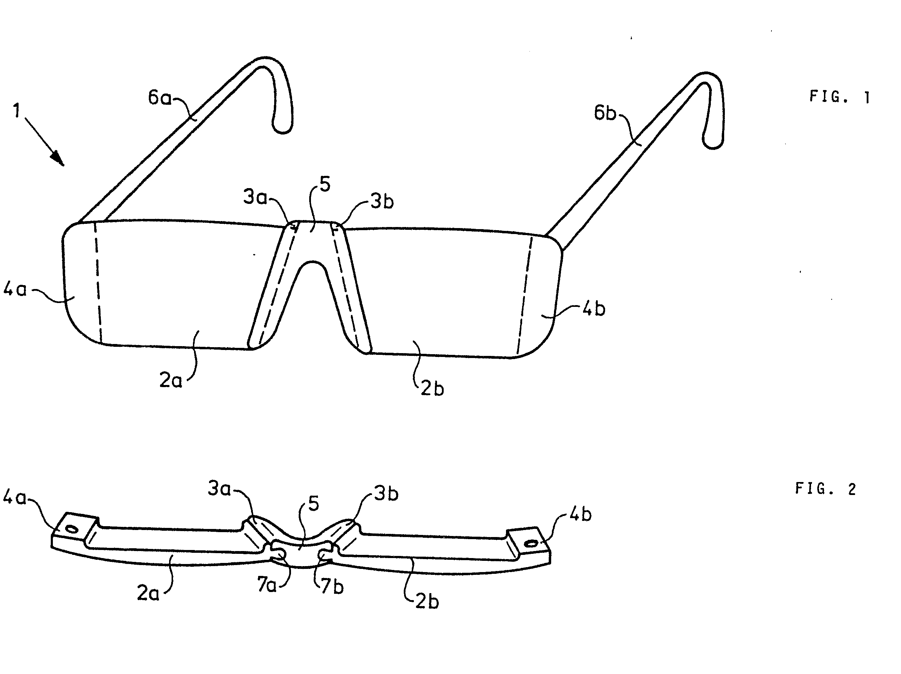

Das in den Fig. 1 und 2 dargestellte Sehhilfsgerät 1 besitzt
zwei im Abstand nebeneinander angeordnete, optische Linsen 2a
und 2b, an deren seitlichen Rändern Halteorganteile 3a und 3b
bzw. 4a und 4b angeformt sind. Zur gegenseitigen Verbindung
der beiden Linsen 2a und 2b ist ein mittiges Stützteil 5 vorgesehen, welches einen bogenförmigen Ausschnitt aufweist, sodass das Stützteil 5 auf der Nasenwurzel eines Benützers aufruhen kann. An den äusseren Enden des Sehhilfsgerätes ist je
ein Bügel 6a und 6b schwenkbar befestigt, deren Enden auf den
Ohrmuschelansätzen des Benutzers aufzuliegen bestimmt sind.

Wie insbesondere aus der Fig. 2 ersichtlich ist, erfolgt die
Befestigung der beiden Linsen 2a und 2b am mittigen Stützteil
5 mit Hilfe der Halteorgane 3a und 3b, welche an den beiden
Linsen 2a und 2b angeformt sind. Zu diesem Zweck besitzt das mittige Stützteil 5 entlang seiner beiden den Linsen zugewandten Seitenkanten je eine hinterschnittene Nut, in welche
entsprechend geformte Fortsätze 7a und 7b der Halteorganteile
3a und 3b eingreifen. Die Befestigung der Bügel 6a und 6b erfolgt an den äusseren, ebenfalls an die Linsen 2a und 2b angeformten Halteorganteilen 4a und 4b auf nicht näher dargestellte Weise, z.B. mittels eines einsteckbaren oder anschraubbaren Scharniers.

Ein solches insbesondere als Lesehilfe ausgebildetes Sehhilfsgerät 1 lässt sich somit auf einfachste Weise vom Benutzer
selbst zusammenstellen bzw. in einem späteren Zeitpunkt auch
wieder auseinandernehmen, mit dem Zweck, die beiden Linsen 2a
und 2b den individuellen Gegebenheiten anzupassen. In der
Praxis wird der Verkäufer eine Anzahl unterschiedlicher Mittelteile 5 zur Auswahl haben, die sich einerseits in Bezug auf
deren Gesamtbreite, d.h. bezüglich des Abstandes der randseitigen Nuten, und andererseits bezüglich der Form und Grösse
des Nasenwurzel-Ausschnittes oder auch in Bezug auf beide
Parameter unterscheiden. Der Benutzer wählt das ihm passende
Mittelteil 5 aus, wobei er einerseits auf den Tragkomfort und
andererseits auf seinen Augenabstand achtet.

Nun kann die rechte und die linke Linse 2a bzw. 2b durch Versuch aus einer Auswahl von Linsen verschiedener Brennweiten
ausgewählt werden. Bei einem Sehhilfsgerät, insbesondere Lesehilfsgerät der gattungsgemässen Art kann dies ohne weiteres empirisch erfolgen, zumal es sich dabei meistens um vergleichsweise preiswerte Kunststofflinsen handeln wird, die
ohne grosse Kostenfolge nachträglich ausgetauscht werden können, wenn auf Anhieb nicht die richtige Stärke gefunden werden
konnte.

Nach erfolgter Auswahl von Mittelteil 5 und Linsen 2a und 2b
werden letztere an das Mitteilteil angesteckt bzw. eingeschoben und randseitig mit je einem Bügel versehen; dies kann
ohne Mühe und Vorkenntnisse vom Benutzer selbst erledigt werden.

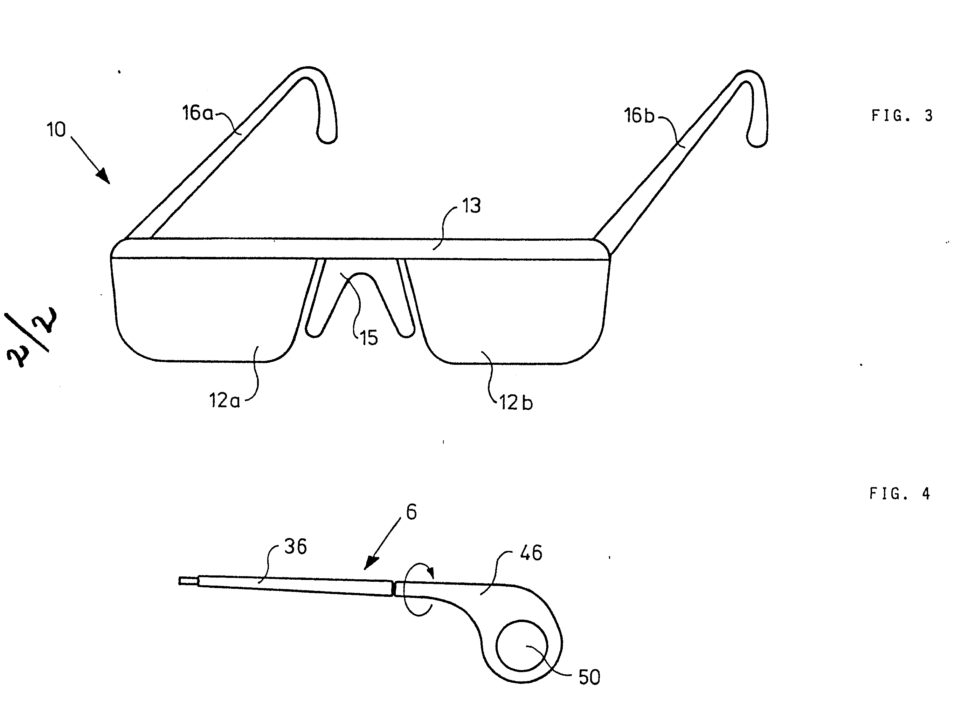

In der Fig. 3 ist ein weiteres Ausführungsbeispiel eines Sehhilfsgerätes, insbesondere Lesehilfsgerätes 10 dargestellt.
Dieses weist ein längliches Halteorgan 13 auf, welches z.B.
als stabförmiger Träger mit einer gegen unten offenen, hinterschnittenen Nut versehen sein kann. Das Halteorgan 13 dient
als Tragelement für einen mittigen Stützteil 15 und für zwei
Linsen 12a und 12b. Zwei Bügel 16a und 16b sind an den freien
Enden des Halteorganes 13 durch nicht näher dargestellte Mittel schwenkbar befestigt. Sowohl der mittige Stützteil 15 als
auch die beiden Linsen 12a und 12b können mit einem oberseitig
abstehenden Fortsatz versehen sein, der entsprechend der Kontur der Nut im Halteorgan 13 geformt ist, sodass diese Teile
leicht und lösbar zusammengesteckt werden können.

Der Vorteil dieser Ausführungsform liegt darin, dass die gegenseitige Lage zwischen den beiden Linsen 12a und 12b einerseits und dem Mittelteil 15 andererseits sehr leicht verändert werden kann, um die Lesehilfe auf den individuellen Augenabstand einzustellen. Es versteht sich, dass auch in diesem Fall eine Mehrzahl von unterschiedlich starken Linsen sowie eine Mehrzahl von Mittelteilen mit unterschiedlich geformten Ausschnitten zur Auswahl gehalten werden kann, um eine dem Benutzer ideal angepasste Lesehilfe zur Verfügung zu stellen.

Bei einer (nicht dargestellten) Weiterbildung des Erfindungsgegenstandes kann der Mittelteil verstellbar ausgebildet sein, um ihn bezüglich der Breite der Nasenwurzel-Auflage und/oder bezüglich der Befestigungspunkte der Halteorgane für die Linsen und somit des Linsenabstandes einstellbar zu gestalten.

Eine Weiterbildung des erfindungsgemässen Gerätes sieht vor, wie aus Fig. 4 zu sehen ist, dass im Bügelendbereich 46 eines Bügels 6 eine Lupe 50 eingebaut ist. Diese wird insbesondere dann gute Dienste leisten, wenn ein sehr kleiner Gegenstand bzw. eine sehr kleingedruckte Schrift auch mit der Lesehilfe nicht mehr erkannt werden kann. Der Bügelendbereich 46 mit der Lupe 50 kann gegenüber dem eigentlichen Bügelbereich 36 schwenkbar ausgebildet sein, wie es in Fig. 5 durch einen Pfeil angedeutet ist, um die Handhabung der Lupe 50 zu erleichtern.

Es versteht sich, dass das Traggestell für die Linsen, namentlich der mittige Stützteil, die Halteorgane sowie die Bügel, ausserdem in verschiedensten Variationen bezüglich Farbe, Ausführung, Material usw. angeboten werden können, sodass einem
Benutzer auch in dieser Hinsicht ein grosser Spielraum für die
individuelle Gestaltung seiner Lesehilfe bleibt.

Mit dem erfindungsgemäss vorgeschlagenen Sehhilfsgerät, insbesondere Lesehilfsgerät ist ein Gerät geschaffen, welches sich
auf einfachste Weise vom Benutzer selbst optimal an seine Bedürfnisse anpassen lässt und somit bezüglich des Tragkomfortes
wie auch des Sehvermögens selbst sehr hohe Ansprüche zu befriedigen vermag. Die benötigten Einzelteile sind einfach und
preisgünstig herstellbar, sodass ein solches Lesehilfsgerät
kaum teurer zu sein braucht als bisher bekannte, fest zusammengesetzte bzw. zusammengestellte Geräte dieser Art.

PATENTANSPRUECHE

1. Sehhilfsgerät, insbesondere Lesehilfsgerät, mit einem Traggestell für zwei im Abstand nebeneinander angeordnete, optische Linsen, welches Gestell einen mittigen, zur Auflage auf
die Nasenwurzel eines Benützers bestimmten Stützteil, mindestens ein mit diesem mittigen Stützteil verbundenes Halteorgan
zur Aufnahme der beiden Linsen sowie zwei an den freien Enden
des Gestells schwenkbar befestigte, zur Auflage auf den Ohrenflügel-Ansätzen bestimmte Bügel aufweist, dadurch gekennzeichnet, dass die beiden optischen Linsen (22a,22b) lösbar und
durch den Benutzer des Sehhilfsgerätes (20) auswechselbar am
Halteorgan bzw. an den Halteorganen (23a,23b,24a,24b) des
Traggestelles befestigt ist bzw. sind, währenddem das Halteorgan bzw. die Halteorgane (23a,23b,24a,24b) mit dem mittigen
Stützteil (25) fest verbunden ist bzw. sind.

2. Sehhilfsgerät, insbesondere Lesehilfsgerät, mit einem Traggestell für zwei im Abstand nebeneinander angeordnete, optische Linsen, welches Gestell einen mittigen, zur Auflage auf
die Nasenwurzel eines Benützers bestimmten Stützteil, mindestens ein mit diesem mittigen Stützteil verbundenes Halteorgan
zur Aufnahme der beiden Linsen sowie zwei an den freien Enden
des Gestells schwenkbar befestigte, zur Auflage auf den Ohrenflügel-Ansätzen bestimmte Bügel aufweist, dadurch gekennzeichnet, dass die beiden optischen Linsen 2a,2b) fest mit dem Halteorgan bzw. den Halteorganen (3a,3b,4a,4b) des Traggestelles verbunden ist bzw. sind oder dass jede Linse mit dem zugeordneten Haltorganteil zusammen eine unlösbare Einheit bildet, währenddem das Halteorgan bzw. die Halteorgane (3a,3b) bzw. die genannten Einheiten mit dem mittigen Stützteil (5) lösbar und durch den Benutzer auswechselbar verbunden sind.

3. Sehhilfsgerät, insbesondere Lesehilfsgerät, mit einem Traggestell für zwei im Abstand nebeneinander angeordnete, optische Linsen, welches Gestell einen mittigen, zur Auflage auf die Nasenwurzel eines Benützers bestimmten Stützteil, mindestens ein mit diesem mittigen Stützteil verbundenes Halteorgan zur Aufnahme der beiden Linsen sowie zwei an den freien Enden des Gestells schwenkbar befestigte, zur Auflage auf den Ohrenflügel-Ansätzen bestimmte Bügel aufweist, dadurch gekennzeichnet, dass sowohl die beiden optischen Linsen (12a,12b) mit dem jeweils zugeordneten Halteorganteil (13) als auch das Halteorgan (13) bzw. die Halteorgane mit dem mittig angeordneten Stützteil (15) lösbar und durch den Benutzer auswechselbar verbunden sind.

4. Sehhilfsgerät nach einem der Ansprüche 1 bis 3, dadurch gekennzeichnet, dass der mittige Stützteil, bezogen auf den Abstand der Befestigungsorte für zwei davon abstehende Linsen-Halteorgane, verstellbar ausgebildet ist.

5. Sehhilfsgerät nach einem der Ansprüche 1 bis 3, dadurch gekennzeichnet, dass der mittige Stützteil bezüglich der Breite der Auflagefläche auf der Nasenwurzel verstellbar ausgebildet ist.

6. Sehhilfsgerät nach einem der Ansprüche 1 bis 3, dadurch gekennzeichnet, dass der mittige Stützteil, bezogen auf den Abstand der Befestigungsorte für zwei davon abstehende Linsen-Halteorgane sowie bezüglich der Breite der Auflagefläche auf der Nasenwurzel verstellbar ausgebildet ist.

7. Sehhilfsgerät nach einem der Ansprüche 1 bis 6, dadurch gekennzeichnet, dass am ohrauflageseitigen Ende (46) zumindest des einen Bügels (36) eine Lupe (50) eingebaut ist.

8. Sehhilfsgerät nach Anspruch 7, dadurch gekennzeichnet, dass das ohrauflageseitige Ende (46) zumindest des einen Bügels, welches die Lupe (50) enthält, gegenüber dem restlichen Bügelteil (36) schwenkbar ausgebildet ist.

9. Satz von Sehhilfsgeräten nach einem der vorangehenden Ansprüche, dadurch gekennzeichnet, dass das mittige Stützteil (5;15), bezogen auf den Abstand der Befestigungsorte für zwei davon abstehende Linsen-Halteorgane (3a,3b;13), innerhalb des Satzes unterschiedliche Breiten besitzt.

10. Satz von Sehhilfsgeräten nach einem der Ansprüche 1 bis 8, dadurch gekennzeichnet, dass das mittige Stützteil (5;15;25) bezüglich seiner Auflagefläche auf der Nasenwurzel innerhalb des Satzes unterschiedliche Breiten besitzt.

11. Satz von Sehhilfsgeräten nach einem der Ansprüche 1 bis 8, dadurch gekennzeichnet, dass das mittige Stützteil (5;15;25), bezogen auf den Abstand der Befestigungsorte für zwei davon abstehende Linsen-Halteorgane (3a,3b;23a,23b) und bezüglich seiner Auflagefläche auf der Nasenwurzel innerhalb des Satzes unterschiedliche Breiten besitzt.

12. Satz von Sehhilfsgeräten nach Anspruch 2, dadurch gekennzeichnet, dass innerhalb des Satzes eine Mehrzahl von Linsen (2a,2b;12a,12b;22a,22b) mit unterschiedlichen Brennweiten vorgesehen ist.

1/2

FIG. 1

FIG. 2

FIG. 3

FIG. 4